Europäisches Patentamt

European Patent Office

Office européen des brevets

(11) Veröffentlichungsnummer: **0 204 890**
**B1**

# EUROPÄISCHE PATENTSCHRIFT

(45) Veröffentlichungstag der Patentschrift: **09.05.90**

(51) Int. Cl.⁵: **B 29 C 53/06,** B 32 B 27/10

(21) Anmeldenummer: **86102572.4**

(22) Anmeldetag: **27.02.86**

(54) **Verfahren zur Herstellung von Bauelementen.**

(30) Priorität: **10.05.85 DE 3516862**

(43) Veröffentlichungstag der Anmeldung:
**17.12.86 Patentblatt 86/51**

(45) Bekanntmachung des Hinweises auf die
Patenterteilung:
**09.05.90 Patentblatt 90/19**

(84) Benannte Vertragsstaaten:
**AT BE CH FR GB IT LI NL SE**

(56) Entgegenhaltungen:
**EP-A-0 015 316**
**DE-A-2 236 617**
**GB-A-1 586 199**
**US-A-2 648 370**

(73) Patentinhaber: **RESOPAL GMBH**
**Hans-Böckler-Strasse 4**
**D-6114 Gross-Umstadt (DE)**

(72) Erfinder: **Werres, Willy, Dipl.-Ing. (FH)**
**Lucasweg 6**
**D-6100 Darmstadt (DE)**

(74) Vertreter: **Katscher, Helmut, Dipl.-Ing.**
**Bismarckstrasse 29**
**D-6100 Darmstadt (DE)**

EP 0 204 890 B1

**Beschreibung**

Die Erfindung betrifft ein Verfahren zur Herstellung eines Bauelementes aus dekorativen Schichtpreßstoffen mit einem Kern und einer Dekorschicht, wobei der Kern in eine Außenschicht und eine Innenschicht unterteilt und die Außenschicht mit einer oder mehreren Aussparungen versehen wird, entlang derer nach dem Verpressen eine Verformung vorgenommen wird.

Ein solches Verfahren findet dort Anwendung, wo aus dekorativen Schichtpreßstoffen geformte Bauelemente für den Innenausbau von Häusern, die Möbelherstellung und die Innenverkleidung von Fahrzeugen hergestellt werden.

Aus der EP—PS 0 025 430 ist ein Verfahren zur Herstellung von Schichtstoff-Formteilen bekannt. Bei der Durchführung desselben werden Stapel, bestehend aus mehreren bei erhöhter Temperatur verformbaren Kunstharzschichtpreßstoffplatten als Einzellagen oder aus zwischen diesen Einzellagen angeordneten Gleitschichten, auf Verformungstemperatur gebracht, und in einem Formwerkzeug verpreßt. Der Stapel nimmt im wesentlichen die Form des Formteils an. Nach der Verformung werden die durch Gleitschichten voneinander getrennten Einzellagen, welche den Stapel bilden, miteinander durch ein Bindemittel verbunden. Mit diesem Verfahren werden Formteile von einer Dicke bis zu 10 mm hergestellt.

Bei einem bekannten Verfahren der eingangs genannten Gattung (EP—A—15316) wird die Außenschicht in dem für die Verformung vorgesehenen Bereich nachträglich durch Schleifen, Fräsen, Hobeln oder in ähnlicher Weise entfernt. Diese Arbeitsgänge sind sehr aufwendig.

Der Erfindung liegt daher die Aufgabe zugrunde, ein Verfahren der eingangs genannten Gattung so auszubilden, daß die Vorbereitung der für die Verformung vorgesehenen Zonen in einfacher Weise und mit geringem Aufwand erfolgen kann, wobei insbesondere eine spanabhebende Nachbearbeitung nach dem Pressen entfallen soll.

Diese Aufgabe wird erfindungsgemäß dadurch gelöst, daß die Außenschicht aus mehreren voneinander getrennten, direkt aneinander angrenzenden Stapeln gebildet wird, und daß die Aussparungen nach dem Verpressen durch Entfernen von Stapeln aus der Außenschicht gebildet werden.

Die Vorbereitung der für die Verformung vorgesehenen Zonen erfolgt schon beim Pressvorgang. Somit erfordert die Herstellung des geformten Bauelements nur zwei Arbeitsgänge. Nach dem Verpressen der Schichtpreßstoffe zu Platten ist nur noch die Verformung derselben zu den gewünschte Bauelementen durchzuführen. Eine Verleimung von vorgeformten Elementen zu dem gewünschten Formteil ist hierbei nicht erforderlich. Die dekorativen Schichtpreßstoffe können vorgefertigt und gleich anschließend oder zu einem späteren Zeitpunkt zu den gewünschten Bauelementen weiterverarbeitet werden. Die vorgefertigten dekorativen Schichtpreßstoffe können beliebig lange zwischengelagert werden.

Mit dem erfindungsgemäßen Verfahren können geformte Bauelemente mit Abrundungen hergestellt werden, die einen Krümmungsradius von weniger als 2 cm aufweisen.

Die Dicke der dekorativen Schichtpreßstoffe, mit denen das Verfahren durchgeführt werden kann, ist weder auf große noch auf kleine Werte begrenzt. Da sich dekorative Schichtpreßstoffe mit einer Dicke unter 4 mm noch nach herkömmlichen Verfahren zu geformten Bauelementen verarbeiten lassen, ist eine Anwendung des erfindungsgemäßen Verfahrens erst bei Schichtpreßstoffen sinnvoll, die dicker als 4 mm sind.

Weitere vorteilhafte Ausgestaltungen des erfindungsgemäßen Verfahrens sind Gegenstand von abhängigen Ansprüchen.

Die Durchführung des Verfahrens wird nachfolgend anhand von Zeichnungen näher erläutert.

Es zeigen:

Fig. 1 den Aufbau eines dekorativen Schichtpreßstoffs, der für die Herstellung eines geformten Bauelements verwendet wird,

Fig. 2 den in Fig. 1 dargestellten Schichtpreßstoff nach dem Verpressen,

Fig. 3 das aus dem dekorativen Schichtpreßstoff gemäß Fig. 1 hergestellte selbsttragende Bauelement,

Fig. 4 ein weiteres Bauelement as aus dem in Fig. 2 dargestellten dekorativen Schichtpreßstoff hergestellt ist,

Fig. 5 eine weitere Variante eines Bauelements und

Fig. 6 ein Bauelement, das mit drei Abrundungen versehen ist.

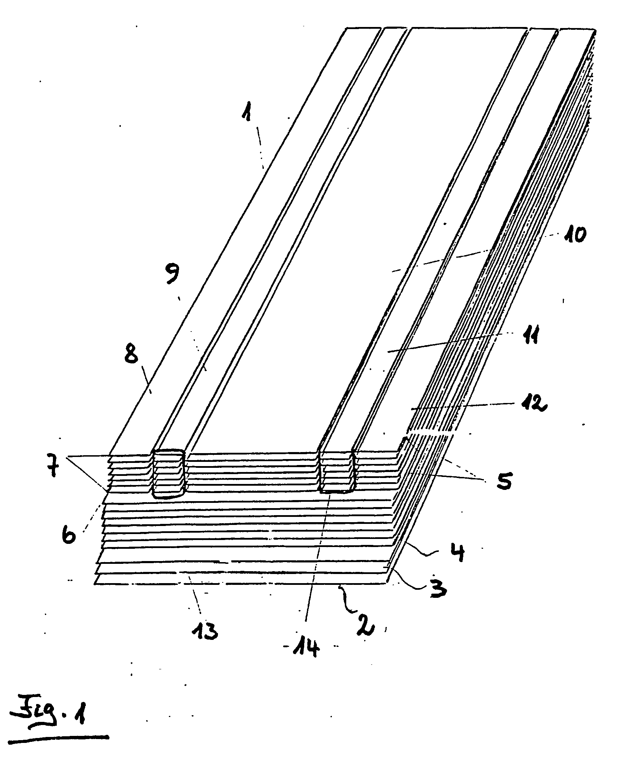

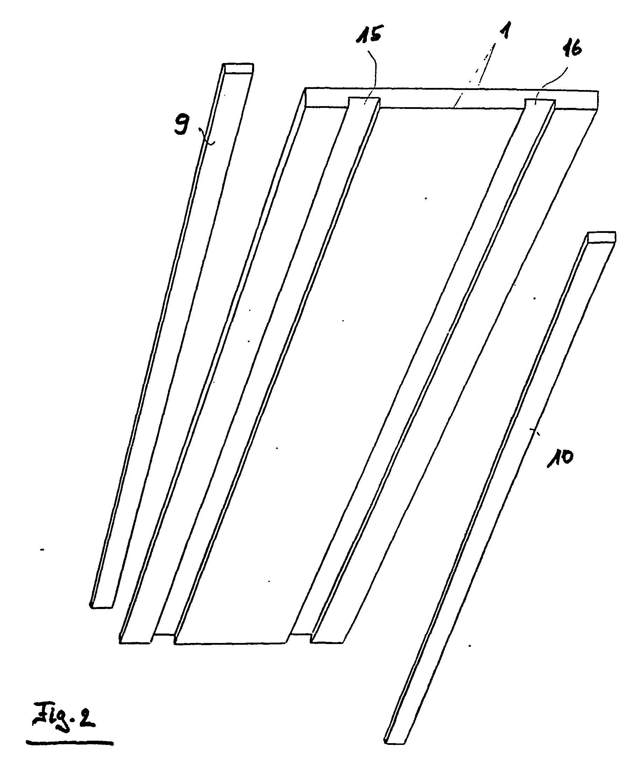

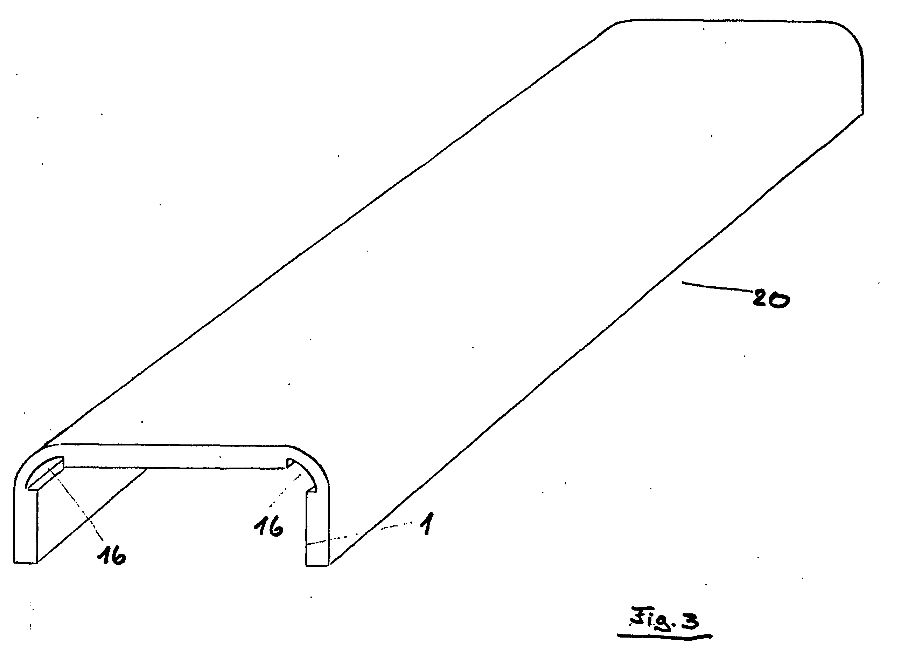

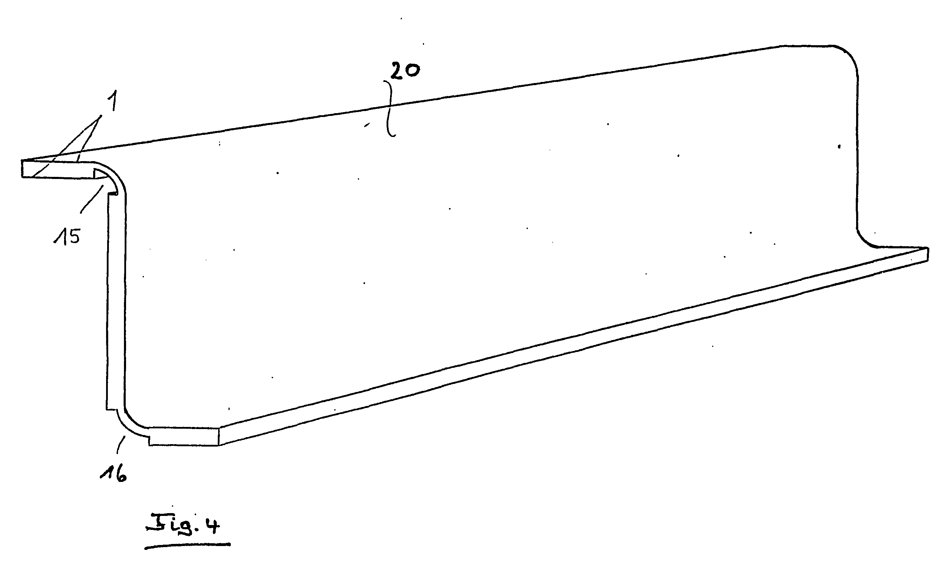

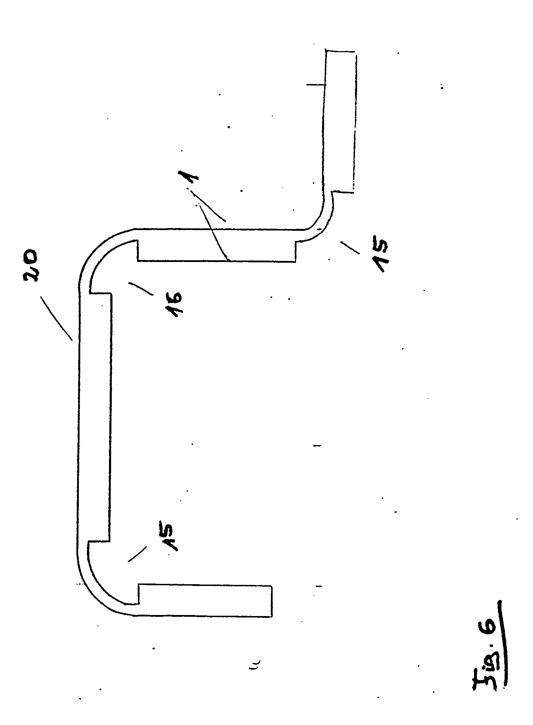

Für die Durchführung des Verfahrens wird zunächst ein dekorativer Schichtpreßstoff 1 in Plattenform hergestellt, wie er in Fig. 1 dargestellt ist. Dieser Schichtpreßstoff 1 wird im wesentlichen durch eine Dekorschicht 2, 3, 4 bestehend aus einer die spätere Oberfläche des Bauelements bildenden transparenten Oberflächenbahn 2, einer Dekorbahn 3, einer Abdeckbahn 4, und einem Kern gebildet. Die transparente Oberflächenbahn 2 wird durch ein Melaminharz getränktes Zellulosepapier gebildet. Bei der Dekorbahn 3 handelt es sich um eine unifarbene, eine bunt eingefärbte oder bedruckte Papierbahn, die ebenfalls mit einem Harz vorzugsweise einem Aminoplastharz getränkt ist, dessen wesentlicher Bestandteil ein Melaminformaldehydharz ist. Die Abdeckbahn 4 besteht ebenfalls aus Papier und ist mit einem Aminoplastharz getränkt. Sie hat die Aufgabe, das Durchscheinen des Kerns 5, der nach dem Verpressen eine dunkelbraune Färbung aufweist, nach obenhin zu vermeiden. Zur Bildung von selbsttragenden Bauelementen ist der Kern 5 erfindungsgemäß in eine Innenschicht 6 und eine Außenschicht 7 aufgeteilt. Die Innenschicht 6 wird durch mehrere aufeinandergesetzte Bahnen aus Natronkraftpapier gebildet, die mit einem Phenolharz getränkt sind. An die Innenschicht 6 schließt sich die Außenschicht 7 an, die bei dem hier dargestellten Ausführungsbeispiel ebenfalls durch Phenolharz getränktes Natronkraftpapier gebildet wird. Abweichend von der Ausbildung der Innenschicht 6 wird die Außenschicht 7 nicht durch zusammenhängende Bögen von Natronkraftpapier gebildet, sondern wie Figur 1 zeigt, durch mehrere Stapel 8, 9, 10, 11 und 12 gebildet. Diese Stapel bestehen ebenfalls aus Natronkraftpapierbahnen, die aufeinandergestapelt und mit Phenolharz getränkt sind. Die Stapel 8 bis 12 sind voneinander getrennt, jedoch so auf der Innenschicht 6 angeordnet, daß sie direkt aneinander grenzen. Ihre Abmessungen sind so gewählt, daß durch sie die darunterliegende Innenschicht 6 vor dem Verpressen vollständig überdeckt wird. Die Höhe der Schichten 6 und 7, insbesondere die Anzahl der verwendeten Kernpapierbahnen je Schicht 6, 7, kann beliebig groß gewählt werden. Insbesondere können die Schichten 6 und 7 so viele Kernpapierbahnen umfassen, daß der dekorative Schichtpreßstoff 1 nach dem Verpressen eine Dicke von 4 bis 20 mm und weit mehr aufweist. Damit der dekorative Schichtpreßstoff 1 auch dann zu einem gewünschten Bauelement geformt werden kann, erfährt die Außenschicht 7 erfindungsgemäß eine besondere Ausbildung. Für die Fertigung der Bauelemente muß der dekorative Schichtpreßstoff 1 entlang definierter Strecken verformt werden. Damit dies möglich ist, wird die Außenschicht 7 so gestaltet, daß entlang dieser Strecken immer ein Stapel 9, 11 angeordnet ist, der nach dem Verpressen aus der Außenschicht 7 herausgenommen werden kann, so daß eine Aussparung 15, 16 gebildet wird, längs derer der dekorative Schichtpreßstoff anschließend verformt werden kann. Damit solche Aussparungen 15 und 16 gebildet werden können, werden die vor dem Verpressen in den späteren Aussparungen 15, 16 sitzenden Stapel 9, 11 so in die Außenschicht 7 eingebettet, daß sie direkt an die Innenschicht 6 bzw. an die benachbarten Stapel 8 und 10 bzw. 10 und 12 angrenzen, jedoch von diesen durch eine Hülle 13 bzw. eine Folie 14 getrennt sind. Wie Figur 1 zeigt, ist der Stapel 9 in eine Hülle 13 eingebettet, während der Stapel 11 durch eine Folie 14, drei drei seiner Begrenzungsflächen abschirmt, von der angrenzenden Innenschicht 6 und den Stapeln 10 und 12 getrennt ist. Bei der Hülle 13 bzw. der Folie 14 handelt es sich um eine sehr dünne Kunststoff-Folie aus Polypropylen, Polyamid oder Polyethylen. Es können selbstverständlich auch Hüllen oder Schläuche 13 und Folien 14 aus anderen Materialien verwendet werden. Sie müssen lediglich die Bedingung erfüllen, daß sie bei der Verpreßtemperatur des dekorativen Schichtpreßstoffs 1 beständig sind. Der in Figur 1 dargestellte dekorative Schichtpreßstoff 1 wird bei einer Temperatur von etwa 150°C und einem Druck von 1200 N/cm² verpreßt, so daß das Harz beim Verpressen nicht vollständig aushärtet. Wird der Stapel 9 bzw. 11 vor dem Verpressen von einer solchen Hülle 13 bzw. Folie 14 umgeben, so verbinden sich die Papierbahnen, die die Stapel 9 und 11 bilden, jedoch wird durch die Hülle 13 bzw. die Folie 14 die Verbindung der Stapel 9 und 11 mit der Innenschicht 6 und den seitlich angrenzenden Stapeln 8, 10 und 12 unterbunden. Dies bedeutet, daß nach dem Verpressen des dekorativen Schichtpreßstoffs 1 die Stapel 9 und 11 der Außenschicht 7 auf einfache Weise entnommen werden können. Wie Figur 2 zeigt, entstehen durch das Entnehmen der Stapel 9 und 11 zwei Aussparungen 15 und 16, die sich über die gesamte Länge der zuvor hier angeordneten Stapel 9 und 11 erstrecken. Zur Ausbildung eines geformten, selbsttragenden Bauelements kann der dekorative Schichtpreßstoff 1 nunmehr durch Einlegen in eine Formpresse und unter der Einwirkung von Druck und Wärme entlang der Aussparungen 15 und 16 umgebogen werden. Aus dem in Figur 2 dargestellten Schichtpreßstoff 1 können die in den Figuren 3, 4 und 5 dargestellten Bauelements 20 durch Umbiegen im Bereich der Ausnehmungen 15 und 16 hergestellt werden. Trotz einer Dicke von mehr als 10 mm können aus dem in Figur 2 dargestellten dekorativen Schichtstoff 1 Bauelemente 20 hergestellt werden, deren Abrundungen einen Krümmungsradius aufweisen, der kleiner ist als 2 cm. Ferner besteht die Möglichkeit die Anzahl der Aussparungen beliebig zu vergrößern, so daß beispielsweise auch ein wie in Figur 6 im Querschnitt dargestelltes Bauelement 20 gebildet werden kann.

Erfindungsgemäß besteht die Möglichkeit, die Außenschicht 7 auch nur mit einem einzigen Stapel 9 zu versehen, wenn das zu bildende Bauelement 20 nur eine Abrundung aufweisen soll, sie z.B. die Arbeitsplatte in einer Küche, die eine nach vorn weisende Abrundungs besitzt, und mit der gegenüberliegenden Kante bündig an einer Wand anliegt.

Ferner können die Stapel 9 und 11, an deren Stelle später die Aussparungen 15, 16 gebildet werden sollen, auch so angeordnet werden, daß ihre Längsachsen nicht parallel, sondern senkrecht zu den Längsachsen der übrigen Stapel 8, 10 und 12 verlaufen, die dauerhaft mit der Innenschicht 6 verpreßt werden.

Erfindungsgemäß besteht die Möglichkeit, die äußere Schicht 7 aus bereits vorgepreßten Stapeln 8, 9, 10, 11 und 12 herzustellen. Für die Ausbildung der Stapel können Schichtpreßstoffe, Spanplatten oder andere Materialien verwendet werden. Aus dem jeweilig gewählten Werkstoff werden zur Ausbildung eines dekorativen Schichtpreßstoffs 1, wie er in Figur 1 dargestellt ist, Stapel 8, 9, 10, 11 und 12 gebildet. Diese müssen über ihre gesamte Länge die gleiche Höhe aufweisen und auch untereinander gleich hoch sein, so daß die nach außen weisende Seite der Außenschicht 7 keinerlei Unebenheiten aufweist. Die aus einem beliebigen Werkstoff gebildeten Stapel 8, 9, 10, 11 und 12 weisen, Länge und Breite betreffend, solche Abmessungen auf, daß durch sie die darunterliegende Innenschicht 6 vollständig überdeckt wird. Damit der dekorative Schichtpreßstoff 1 nach dem Verpressen zur Ausbildung von Bauteilen in entsprechender Weise gebogen werden kann, müssen auch hierbei Maßnahmen getroffen werden, die es ermöglichen, daß nach dem Verpressen Aussparungen 15, 16 entstehen, entlang derer die Verformung vorgenommen werden kann. Zu diesem Zweck werden auch hierbei die Stapel 9 und 11, zur Bildung von Aussparungen 15 und 16 in eine Hülle oder einen Schlauch 13 gesteckt und zwischen den benachbarten Stapeln angeordnet. Die andere Alternative bestet darin, die Begrenzungsflächen der Stapel 9 und 11, welche an die Innenschicht 6 bzw. an die benachbarten Stapel 8, 10 bzw. 10, 12 angrenzen, mit einer Folie 14 zu umgeben, so daß beim Verpressen eine Verbindung zwischen den Stapeln bzw. der Innenschicht 6 ausgeschlossen ist. Die Hülle oder der Schlauch 13 bzw. die Folie 14 sind aus den oben beschriebenen Werkstoffen gefertigt. Hierdurch wird sichergestellt, daß die Stapel 9 und 11 nach dem Verpressen der Außenschicht 7 entnommen werden können und die Aussparungen 15 und 16 in der Außenschicht 7 verbleiben. Die Stapel 8, 10 und 12 der Außenschicht 7 werden beim Verpressen des dekorativen Schichtpreßstoffs 1 dauerhaft mit der Innenschicht 6 verbunden. Nach dem Verpressen können, wie oben beschrieben, aus dem dekorativen Schichtpreßstoff 1 die jeweils gewünschten Bauelemente gefertigt werden.

Die Bauelemente 20 können bei Bedarf auch so hergestellt werden, daß sie beidseitig eine Dekorschicht aufweisen und auch die Aussparungen das entsprechende Dekor zeigen.

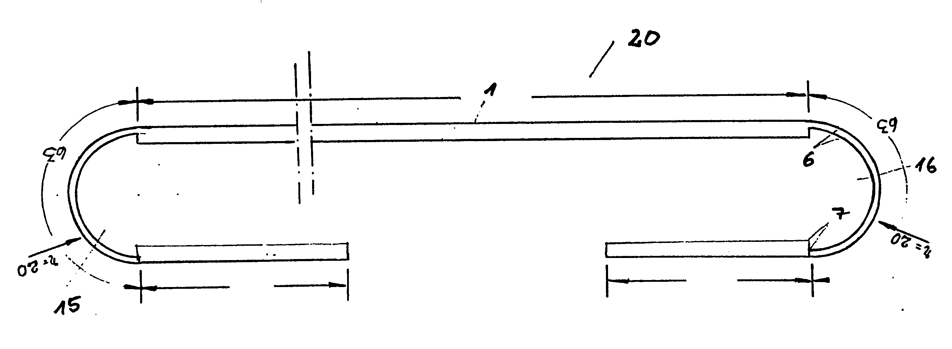

Anhand von Figur 5 ist zu sehen, wie weit ein dekorativer Schichtpreßstoff 1 im Bereich der Aussparungen 15 und 16 zur Fertigung abgerundeter Kanten umgebogen werden kann. Wie Figur 5 weiter zeigt, wird die Wandstärke eines nach dem erfindungsgemäßen Verfahren hergestellten Bautelements im Bereich seiner Aussparungen 15 und 16 durch die Dicke der Innenschicht 6 und der nach außenhin folgenden Abdeckbahn 4, Dekorbahn 3 und transparenten Oberflächenbahn 2 bestimmt. Für die Ausbildung eines Bauelements 20, dessen Stärke etwa 10 mm beträgt, werden für die Ausbildung der Innen- und der Außenschicht 6 und 7 etwa 50 mit Phenolharz getränkte Natronkraftpapierbahnen benötigt, die gemäß der in Figur 1 dargestellten und in der dazugehörigen Beschreibung erläuterten Weise aufeinandergeschichtet werden. Je nach der gewünschten Stärke, welche die Seitenwände der Aussparungen 15 und 16 nach dem Verpressen aufweisen sollen, werden in der Außenschicht 7 demgemäß Stapel 8, 9, 10, 11 und 12 so gebildet, daß nach dem Verpressen der Außenschicht 7 soviel Material entnommen werden kann, daß die gewünschte Wandstärke verbleibt. Falls es erforderlich ist, können die Aussparungen 15 und 16 so bemessen werden, daß ihre Wand, die durch die Innenschicht 6 und die Dekorschicht 2, 3, 4, gebildet wird, nur noch 10% der gesamten ursprünglichen Dicke des Schichtpreßstoffs 1 aufweist.

**Patentansprüche**

1. Verfahren zur Herstellung eines Bauelementes (20) aus dekorativen Schichtpreßstoffen (1) mit einem Kern (5) und einer Dekorschicht (2, 3, 4), wobei der Kern (5) in eine Außenschicht (7) und eine Innenschicht (6) unterteilt und die Außenschicht (7) mit einer oder mehreren Aussparungen (15, 16) versehen wird, entlang derer nach dem Verpressen eine Verformung vorgenommen wird, dadurch gekennzeichnet, daß die Außenschicht (7) aus mehreren voneinander getrennten, direkt aneinander angrenzenden Stapeln (8, 9, 10, 11 und 12) gebildet wird, und daß die Aussparungen (15, 16) nach dem Verpressen durch Entfernen von Stapeln (9, 11) aus der Außenschicht (7) gebildet werden.

2. Verfahren nach Anspruch 1, dadurch gekennzeichnet, daß die Stapel (8, 9, 10, 11, 12) durch aufeinandergeschichtete mit Phenolharz getränkte Natronkraftpapiere gebildet werden.

3. Verfahren nach Anspruch 1, dadurch gekennzeichnet, daß die Stapel (8, 9, 10, 11, 12) durch Schichtpreßstoffplatten gebildet werden, deren Harz noch nicht vollständig ausgehärtet ist.

4. Verfahren nach einem der Ansprüche 1 bis 3, dadurch gekennzeichnet, daß die zur Bildung der Aussparungen (15, 16) nach dem Verpressen zu entnehmenden Stapel (9, 11) durch Trennmittel (13, 14) von den angrenzenden Stapeln (8, 10 und 10, 12) und der Innenschicht (6) getrennt werden.

5. Verfahren nach Anspruch 4, dadurch gekennzeichnet, daß die Stapel (9, 11) in Hüllen oder Schläuchen (13) aus Polypropylen, Polyamid oder Polyethylen angeordnet werden, welche die Stapel (9 und 11) über ihre gesamte Länge eng umspannen.

6. Verfahren nach Anspruch 4, dadurch gekennzeichnet, daß die zur Bildung der Aussparungen (15 und 16) vorgesehenen Stapel (9 und 11) durch eine Folie (14) aus Polypropylen, Polyamid oder Polyethylen gegen die angrenzenden Stapel (8, 10 und 10, 12) sowie gegen die Innenschicht (6) abgegrenzt werden.

7. Verfahren nach einem der Ansprüche 1 bis 6, dadurch gekennzeichnet, daß zur Ausbildung der Aussparungen (15, 16) die Längsachsen der Stapel (9, 11) parallel oder senkrecht zu den Längsachsen der mit der Innenschicht (6) dauerhaft zu verpressenden Stapel (8, 9, 10, 12) angeordnet werden.

8. Verfahren nach einem der Ansprüche 1 bis 6, dadurch gekennzeichnet, daß das Verpressen und das Verformen des dekorativen Schichtpreßstoffs (1) unter Zufuhr von Druck und Wärme erfolgt.

**Revendications**

1. Procédé pour la fabrication d'un élément de construction (20) à partir de stratifiés décoratifs (1), comportant un coeur (5) et une couche décorative (2, 3, 4), le coeur (5) étant scindé en une couche externe (7) et une couche interne (6), la couche externe (7) étant pourvue d'un ou plusieurs évidements (15, 16), le long desquels sera réalisée une mise en forme après pressage, caractérisé en ce que la couche externe (7) est contituée de plusieurs empilages (8, 9, 10, 11 et 12) séparés l'un de l'autre mais contigus et en ce que les évidements (15, 16) sont obtenus après le pressage, par l'extraction hors de la couche externe (7), des empilages (9, 11).

2. Procédé selon la revendication 1, caractérisé en ce que les empilages (8, 9, 10, 11 et 12) sont formés par des couches superposées de papier kraft à la soude imprégné de résine phénolique.

3. Procédé selon la revendication 1, caractérisé en ce que les empilages (8, 9, 10, 11 et 12) sont formés de plaques stratifiées dont la résine n'est pas encore complètement durcie.

4. Procédé selon l'une des revendications 1 à 3, caractérisé en ce que les empilages (9, 11) destinés à être enlevés après le pressage en vue de la formation des évidements (15, 16) sont séparés par des moyens de séparation (13, 14) des empilages adjacents (8, 10 et 10, 12) et de la couche interne (6).

5. Procédé selon la revendication 4, caractérisé en ce que les empilages (9, 11) sont disposés dans des gaines ou fourreaux (13) en polypropylène, polyamide ou polyéthylène qui enserrent étroitement les empilages (9 et 11) sur toute leur longueur.

6. Procédé selon la revendication 4, caractérisé en ce que les empilages (9 et 11) prévus pour l'obtention des évidements (15 et 16) sont séparés des empilages adjacents (8, 10 et 10, 12) comme de la couche interne (6) par une feuille (14) en polypropylène, polyamide ou polyéthylène.

7. Procédé selon l'une des revendications 1 à 6, caractérisé en ce que pour l'obtention des évidements (15, 16) les axes longitudinaux des empilages (9, 11) sont disposés parallèlement ou perpendiculairement aux axes longitudinaux des empilages (8, 9, 10, 12) définitivement fixés sur la couche interne (6).

8. Procédé selon l'une des revendications 1 à 6, caractérisé en ce que le pressage et la mise en forme du stratifié décoratif (1) a lieu sous l'application de pression et de chaleur.

**Claims**

1. Method for the production of a component (20) from decorative moulded laminates (1) with a core (5) and a decorative layer (2, 3, 4), the core (5) being subdivided into an outer layer (7) and an inner layer (6) and the outer layer (7) being provided with one or more recesses (15, 16), along which, after pressing, a deformation is carried out, characterised in that the outer layer (7) is made up from several stacks (8, 9, 10, 11 and 12), separated from each other, directly adjacent to each other, and that the recesses (15, 16) are formed after pressing by removal of the stacks (9, 11) from the outer layer (7).

2. Method according to Claim 1, characterised in that the stacks (8, 9, 10, 11, 12) are made up from soda papers impregnated with phenolic resin, laminated onto each other.

3. Method according to Claim 1, characterised in that the stacks (8, 9, 10, 11, 12) are made up of moulded laminate sheets, the resin of which has not yet been completely cured.

4. Method according to one of Claims 1 to 3, characterised in that the stacks (9, 11) to be removed after pressing in order to form the recesses (15, 16) are separated by separating agents (13, 14) from the adjacent stacks (8, 10 and 10, 12) and from the inner layer (6).

5. Method according to Claim 4, characterised in that the stacks (9, 11) are arranged in sheaths or sleeves (13) made of polypropylene, polyamide or polyethylene, which envelop the stacks (9 and 11) closely over their whole length.

6. Method according to Claim 4, characterised in that the stacks (9 and 11) provided for forming the recesses (15 and 16) are separated by a film (14) of polypropylene, polyamide or polyethylene from the adjacent stacks (8, 10 and 10, 12) and also from the inner layer (6).

7. Method according to one of Claims 1 to 6, characterised in that, for the construction of the recesses (15, 16), the longitudinal axes of the stacks (9, 11) are arranged parallel or perpendicularly to the longitudinal axes of the stacks (8, 9, 10, 12) to be permanently pressed with the inner layer (6).

8. Method according to one of Claims 1 to 6, characterised in that the pressing and the deformation of the decorative moulded laminate (1) takes place with the application of pressure and heat.

Fig. 1

1

15    1    16

9

10

Fig. 2

20

1

16

16

Fig. 3

Fig. 4

Fig. 6